# EUROPEAN PATENT APPLICATION

(11) **EP 0 961 519 A2**
(43) Date of publication of application: **01.12.1999**
(21) Application number: 99303294.5
(22) Date of filing: 28.04.1999
(51) Int. Cl.: H04Q 11/04

(54) **Partitioning of bandwidth, connection types, and service categories for switched services trunk groups**

(30) Priority: 28.05.1998 CA 2239023
(71) Applicant: Newbridge Networks Corporation, Kanata, Ontario K2K 2E6 (CA)
(72) Inventor: Bosloy, Jonathan L., Kanata, Ontario K2W 1A1 (CA); Burns, John C., Kanata, Ontario K2W 1B6 (CA); McAllister, Shawn, Manotick, Ontario K4M 2K6 (CA)
(74) Representative: Harding, Richard Patrick

(57) **Abstract**

A trunk group is provided between interconnected switching nodes in a switched digital network such as an ATM network. Each trunk group is partitioned into one or more partitions for supporting connections of one or more connection types and/or one or more service categories.

## Description

### Field of the Invention

This invention relates to digital communications networks and more particularly to a system and method for creating a subset of bandwidth resources (trunk groups) between ports of interconnected switching elements, the subset bandwidth being partitioned for independent delivery of connections having different parameters such as connection types, service categories, user identification and priority.

### Background

Digital communications systems, such as Cell Relay networks, are known to rely on virtual path (VP) connections for transporting virtual circuit (VC) level services between switching nodes. In order to accommodate different connection types, such as switched virtual circuits (SVCs) or soft permanent virtual circuits (SPVCs) and/or different categories of service i.e. constant bit rate (CBR), real time and non real time variable bit rate (rtVBR and nrtVBR), available bit rate (ABR) and unspecified bit rate (UBR), it has until now been necessary to label a VP to indicate the type of service category or connection type it can carry. This typically requires that more VPs be used, and if the services are being tunneled through a VP network, then many more VPs may be required. Tunneling through a VP network then means that each VP is a fixed size.

### Summary of the Invention

In accordance with the present invention, logical partitioning of a VP is provided. This allows soft vs. hard limits, and a single VP can be tunneled through a VP network and still provide partitioning, such as service category partitioning, or call type partitioning, or both.

It is accordingly one particular object of the present invention to provide a subset of the total system bandwidth that is allocated to a port of a switching element. In the following description this subset is called a Trunk Group (TG). A Trunk Group can contain one or more VPs used for VC level connections, plus a range or group of VP Identifiers (VPIs) used for VP level connections.

In this invention Trunk Groups are used by Switched Services to segment the bandwidth and connection identifiers of a port (e.g. ranges of VPIs and VC Identifiers (VCIs), for Asynchronous Transfer Mode (ATM) so that these resources can be used by the Call Processing function of the switch to establish calls.

With this invention, the network operator can control the types of calls/connections (SVCs vs. PVCs/SPVCs) admitted to the Trunk Group, as well as the service categories of the calls/connections. In addition, several logical partitions per Trunk Group are supported. This allows capabilities such as: reserving bandwidth for certain service categories or groups of service categories; reserving bandwidth for connection types (SVCs vs SPVCs/PVCs); reserving bandwidth based on a mixture of the above two; and the ability to reserve bandwidth for SPVC restoration, yet allowing the establishment of ABR and UBR SVCs when the Trunk Group is not used for SPVC restoration.

Given that traditional PVC path services, which are typically managed by a network manager, are moving over towards SPVC path services, where the PVC service is actually implemented using SVC techniques inside the network, it is difficult to plan a network and have proper separation between the two types of services. With this invention, a common switched services infrastructure can be used, and yet bandwidth can be partitioned by call type (SVC vs SPVC) so that the network operator can plan how much bandwidth is reserved for SPVCs, versus how much bandwidth can be consumed by SVCs. The SVC call type is dynamic in nature and driven by external devices, and thus harder to predict and control. Moreover, the network operator can control how much bandwidth is reserved for calls of different service categories, or groups of service categories.

This invention allows the partitioning of a trunk group, which for VC-level connections, can consist of a single VP. Thus, the partitioning is done at a logical level. This allows the above mentioned features to work even if the Trunk Group connecting two switches is actually carried through another network comprised of VP-level switches. In this way, two such connected switches, using a single VP connection between them, can utilize partitioning of the Trunk Group bandwidth of SVC vs. SPVC/PVC, or by service category, or both.

Another use of the partitioning feature is to reserve bandwidth for SPVC re-routes (since restoration of SPVC services, which are really PVC services implemented in the network as SVCs, is typically important). However, it is better not to completely waste the restoration bandwidth when it is not needed. With the partitioning feature, one or more partitions can have reserved bandwidth for SPVC re-routes, and one or more partitions can be for SVCs. If the SVCs include service categories such as UBR or ABR, then when the SPVC partitions have no calls, the UBR/ABR SVCs can expand to use all the available bandwidth, since the bandwidth consumed by UBR/ABR SVCs is dynamic. Then, if a re-route occurs and SPVCs are moved onto the Trunk Group, the available bandwidth decreases, and the bandwidth available for ABR/UBR connections will automatically be less.

The Trunk Group is assigned a bandwidth (e.g. 100 Mbits/second), and then each partition within the Trunk Group is given a percentage of this bandwidth. The percentages are allowed to add up to more than 100%, which means that the Trunk Group is overbooked, or they can add up to less than 100%, which means the Trunk Group is under booked. For example, three partitions can be set up with 30%, 40%, and 50% of the bandwidth, which means if all three fill up, the Trunk Group is filled to 120% of its bandwidth capacity, and is therefore overbooked.

In accordance with the invention the bandwidth partitioning applies to Switched Services (SVCs, SPVCs), as well as Permanent Virtual Connections (PVCs) for technologies such as ATM, Frame Relay and Time Division Multiplexing (TDM).

Therefore in accordance with one aspect of the present invention there is provided a method of logically partitioning bandwidth resources on ports of interconnected switching elements in a digital communications network comprising: allocating a portion of the bandwidth capacity between the ports to one or more subsets or trunk groups; dividing the subset bandwidth into partitions; and assigning the partitions to services having one or more specific parameters.

In accordance with a second aspect of the invention there is provided a system for managing bandwidth resources on ports of interconnected switching elements in a digital communications network comprising: means to allocate bandwidth at the ports to one or more subsets or trunk groups; means to divide bandwidth allocated to the subsets into partitions; and means to assign the partitions to one or more system services.

In accordance with a further aspect of the invention there is provided a method of determining a trunk group partition for supporting a connection having particular traffic descriptors comprising: preparing a first bit vector representing service capabilities for each trunk group partition; preparing a second bit vector representing service requirements of a new connection; and comparing the first and second bit vectors to locate compatible partitions.

### Brief Description of the Drawings

The invention will now be described in greater detail with reference to the attached drawings wherein:
Figure 1 illustrates virtual path connections between switching elements according to the prior art;
Figure 2 is a high level diagram of a virtual path connection through a service provider's network;
Figure 3 illustrates a network VP cross-connect application utilizing a switching element;
Figure 4 illustrates a SVC/SPVC connection type partition application according to one aspect of the invention;
Figure 5 illustrates trunk groups with bandwidth partitioning for service category support;
Figure 6 illustrates a more complex version of the bandwidth partitioning of Figure 5;
Figure 7 illustrates trunk groups having bandwidth partitioning for ABR/UBR SVCs during SPVC normal/restoration periods;
Figure 8 shows typical usage of circuit emulation (CE) trunk groups;

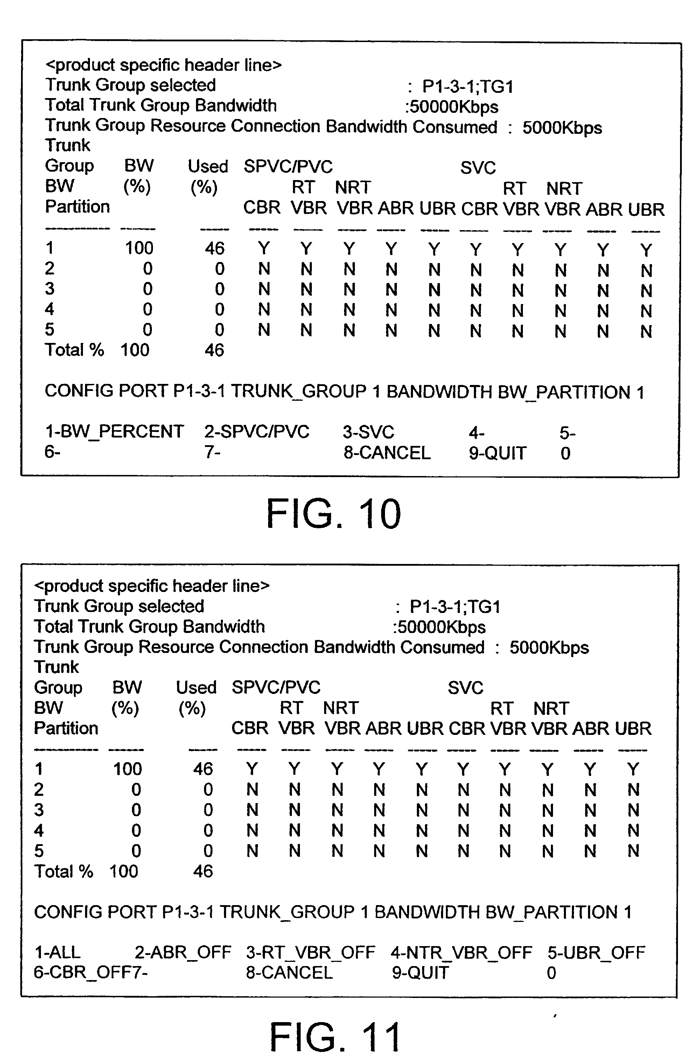

Figures 9 and 10 and 11 illustrate trunk group tables with bandwidth partitioning;
Figure 12 illustrates congestion points at a switching element;
Figure 13 provides an overview of the inheritance hierarchy structure of various ATM classes;
Figure 14 is a flow diagram of switch cell relay (CR) port object;
Figure 15 illustrates cell relay trunk group traffic class implementation;
Figure 16 illustrates the call process protocol; and
Figure 17 illustrates multiple trunk groups between switching elements.

### Detailed Description of the invention

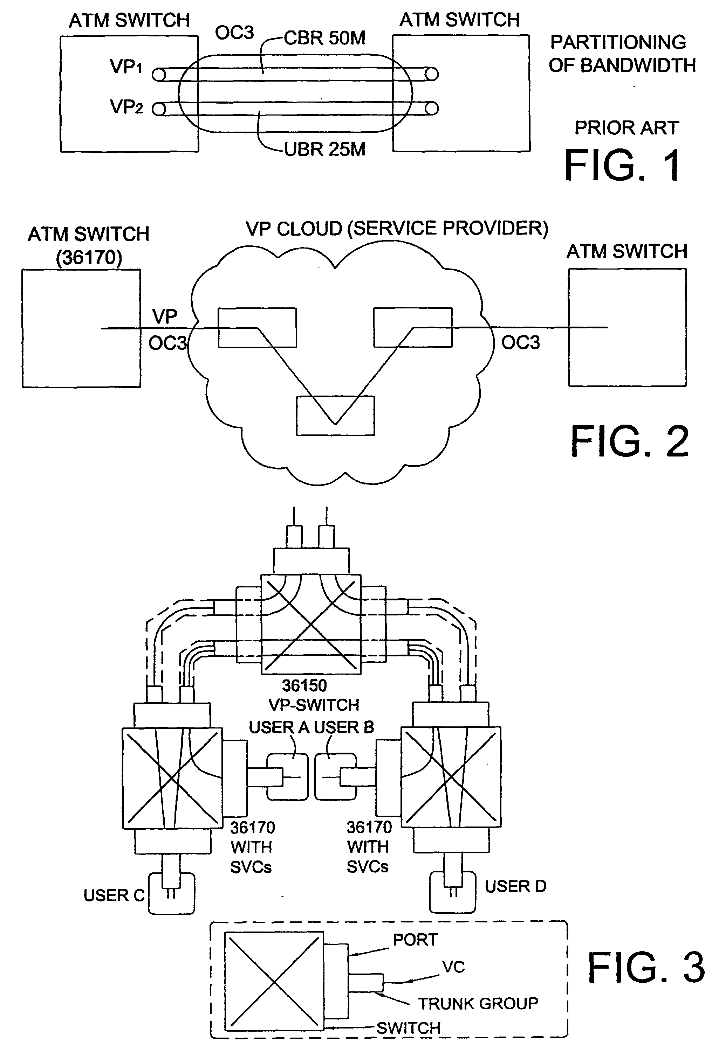

According to the prior art methods, as shown in Figure 1, bandwidth allocation between switching nodes has heretofore been effected by dedicated VPs. In the elementary example shown in Figure 1, ATM switches 12 are joined by a pair of VPs (VP1 and VP2) each of which is provisioned to carry a particular category of service or connection type. In this example VP1 has a bandwidth allocation of 50 Mb/s for carrying constant bit rate (CBR) category of service and VP2 has a bandwidth allocation of 25 Mb/s for unspecified bit rate (UBR) category of service. This allocation of VP bandwidth to a specific category of service or connection type can lead to the inefficient utilization of resources when the designated service category or connection type is under utilized.

Figure 2 illustrates a connection between switching elements 12 which may be, for example, Newbridge MainStreetXpress 36170 multi-service switches through the network or VP cloud 14 maintained by a Service Provider. The VP connection through the network or VP cloud may be a permanent virtual path connection (PVPC), a soft- permanent virtual path connection (S-PVPC) or a switched virtual path connection (SVPC). In any case, the prior art VP has a fixed service category and traffic parameter (i.e. bandwidth). For example, the VP service provided by the Service Provider is partitioned according to services required such as CBR, VBR, UBR, etc.

According to the present invention the bandwidth allocated to a particular port at the switching element is assigned to a trunk group. A trunk group is a subset of a physical interface port or a logical port. A logical port is a combination of physical ports such as might be used, for example, in an Inverse Multiplexing Over ATM (IMOA) implementation. Several physical ports are typically grouped together to form a logical port of higher (i.e. aggregate) bandwidth. Another example is multiple frame relay link support wherein multiple frame relay ports are aggregated to form a logical frame relay port of higher bandwidth. The subset of a cell relay port is a set of one or more VPs. The subset of a frame relay port is a Stream. The subset of a Primary Rate Interface (PRI) circuit emulation port is a set of one or more channels. Resources of the port can be split amongst the trunk groups that are contained within it. There can be one or more trunk groups defined on a port.

Bandwidth partitioning, as it applies to trunk groups, refers to the segmentation of bandwidth provisioned for a trunk group. This logical partitioning may be effected, for example, according to service categories (CBR, VBR, etc,) or connection types, i.e. SVC, PVC/SPVC.

PVC and SPVC connection types may be considered equivalent from the trunk group perspective when allocating bandwidth for the connection. Alternatively, PVC and SPVC connections may be treated independently.

Between switching nodes there may be one or more links and there may be one or more trunk groups per link. Additionally, there may be one or more partitions (five, for example) per or within a trunk group.

Within a switching system, when making a connection on a trunk group of a port, an eligible partition must be chosen. The parameters of the connection, which are derived from the signaling message for dynamic connections or from the management request, are analysed to find a matching partition. For example, the connection type (SVC/PVC/SPVC), the service category (CBR, rtVBR, nrtVBR, ABR, UBR), the connection bandwidth, etc, are considered. Other possible parameters include service class (rtVBR.1, rtVBR.2 etc), customer partition or customer identification (ID), call priorities, etc. Distinct bandwidth parameters may be provisioned in accordance with the particular service required.

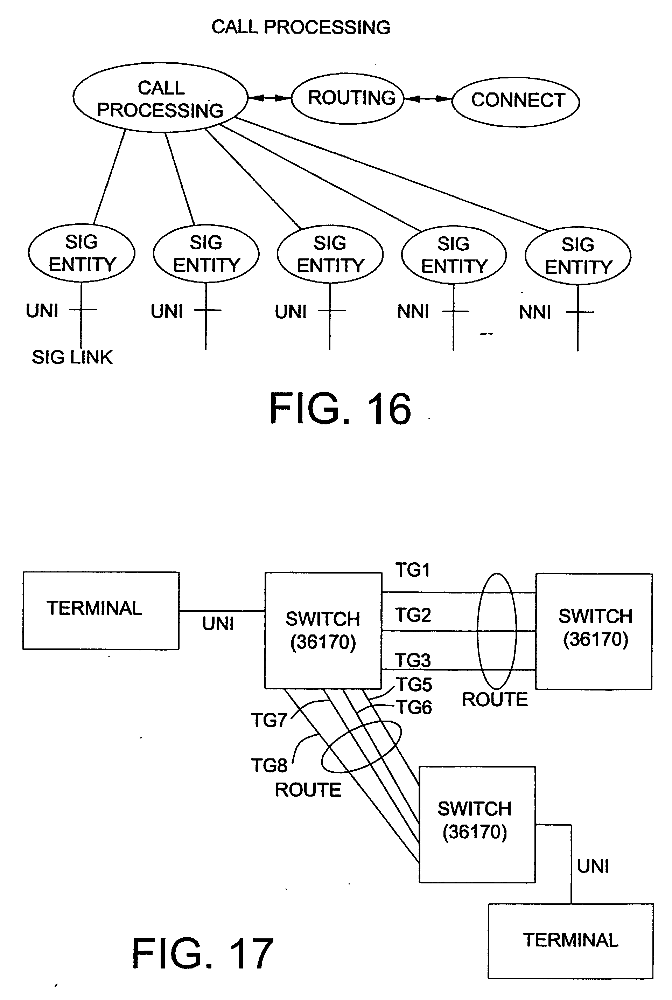

Briefly, on operation of the switch to establish a switched connection, a Signal Entity runs an instance of a signaling protocol at call setup. Call processing accepts the signaling messages as shown in Figure 16. The routing function (Routing) selects the route for directing the call towards the destination and connection performs connection admission control (CAC) and sets up a connection with the switch (i.e. configures the switch fabric and line cards). This will be described in greater detail later with reference to Figure 17.

As indicated previously a trunk group is a subset of a physical interface port or a logical port. Trunk groups provide the following main functionality:
Trunk group creation and basic provisioning;
Trunk group connection endpoint (SVCC, SVPC) support;
Trunk group bandwidth partitioning;
Trunk group connection type (SVC, SPVC/PVC) support;
Trunk group service category support.

A trunk group partitions a port on the virtual path identifier/virtual channel identifier (VPI / VCI) range or on bandwidth. In a particular implementation, partitioning for SVPCs require VPI partitioning.

Figures 3 through 7 illustrate a set of network architectures that require features of trunk groups. The typical applications fall into these areas:
1 The ability to interconnect with VP cross-connect switches.
2 The ability to configure restrictions that apply due to adjacent switches or user devices.
3 The ability to partition system and port resources.
4 The ability to support SVC and SPVC connection endpoints.
5 The ability to partition trunk group bandwidth based on connection type (SVC or SPVC).
6 The ability to partition trunk groups based on connection service category (CBR, VBR, etc.).
7 The ability to partition trunk groups, mixing connection type (SVC, SPVC), and service category support.
8 The ability to reserve trunk group bandwidth resources for SPVC restoration, yet allow establishment of some ABR and UBR SVCs when the trunk group is not used for SPVC restoration.
9 The ability to partition trunk groups based on user identification.
10 The ability to partition trunk groups based on connection priority.
11 The ability to limit or restrict certain connections based upon the above listed attributes. For example, only certain service categories or certain connection types limit maximum bandwidth that may be allowed. For a User-Network Interface (UNI), these restrictions can be used by a Service Provider to limit the allowed use of the UNI by the subscriber. For a Network-Network Interface (NNI), the Service Provider can limit the type of connections that are placed over the NNI trunk group.

Figure 3 shows multiple 36170 SVC switches communicating through a backbone VP cross-connect network providing SVCCs.

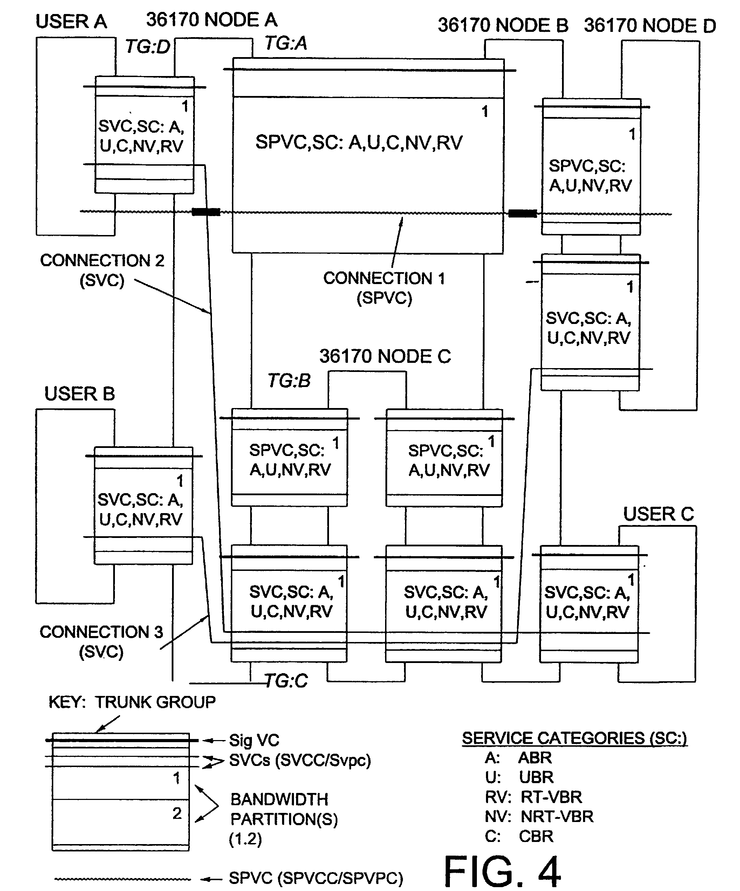

Figure 4 illustrates trunk group partitioning for connection types (SVC / SPVC). Between the various nodes, trunk groups are defined to carry specific connection types for all service categories. As a result, SVCs and SPVCs can only use trunk group resources compatible with the connection type.

Partitioning by connection type allows bandwidth reservation for various applications using SVCs and SPVCs. Reserving bandwidth on a trunk group for SPVCs prevents the trunk group from being totally consumed by dynamic SVCs. It also allows reservation of SPVC bandwidth on alternate routes for SPVC re-establishment in the event of a network failure associated with the primary route trunk group.

For the application example of Figure 4, an SPVC, identified as 'Connection 1' is established for User-A to a User connected via NODE-D. At each of the SPVC endpoints (User-A for example), the SPVC is essentially the same as a PVC, existing outside the trunk group (TG:D). For this SPVC connection at the connection endpoint, resources are allocated (e.g. bandwidth, VPI, and VCI) and connection admission control (CAC) is performed from the port. Through different provisioning of the SPVC, it is possible to use trunk group (TG:D) resources. The trunk group (TG:A) between NODES A-B is defined to carry SPVCs for any service category. The SPVC endpoint connected via NODE-D is also reachable from NODE-A, using a second, SPVC only, trunk group (TG:B), connected via an intermediate node, NODE-C. Based on the route definition, route selection would most likely favor TG:A over TG:B. However, once all TG:A resources reserved for the connection type are exhausted, new connection routing is attempted via TG:B. Assuming the connection requested quality of service (QoS) can be met via TG:B, connection establishment continues.

Note that SVCs are not directly routable from NODE-A to NODE-B, even though a direct-connect carrier and trunk group exists. TG:C is the only SVC trunk group capable of reaching NODES B, C and D from NODE-A. Provisioning in this manner, for example, might make use of lower cost, short hop carriers with intermediate nodes for SVCs, in place of high cost direct connections.

In Figure 4 the illustration for each trunk group shows, based on the size of the trunk group, the relative bandwidth capacities. Within each trunk group, bandwidth partitions of relative reserved capacity are shown. The first bandwidth partition is on the top, up to the maximum reserved for the trunk group. Within each bandwidth partition service category support is indicated.

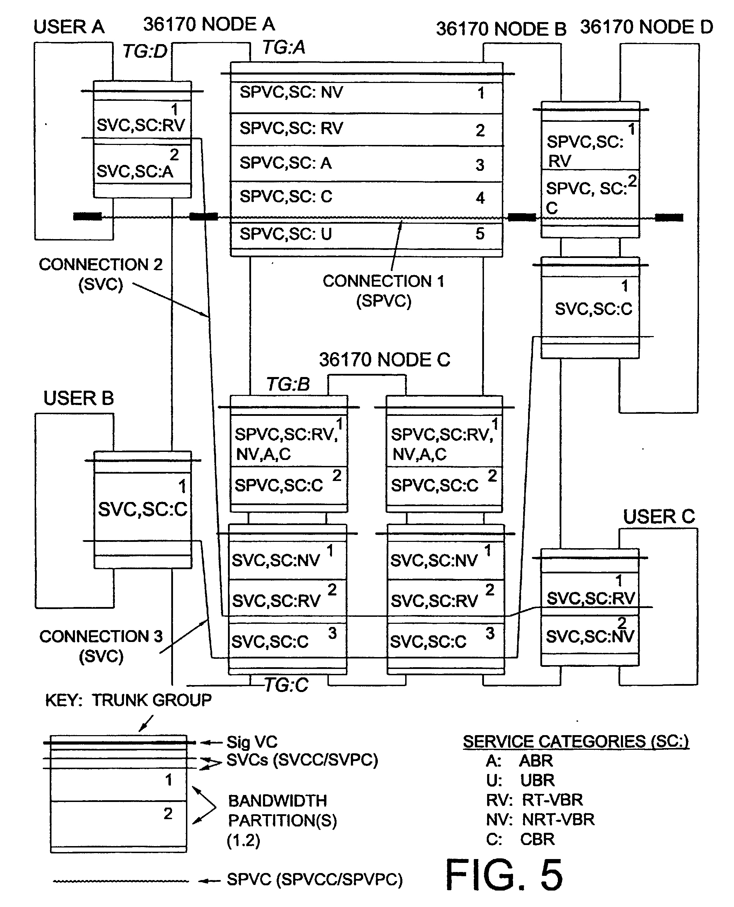

In Figure 5, bandwidth partitioning and service category support is illustrated. Service category support is assigned to specific trunk group bandwidth partitions, similar to the support of connection types as illustrated in Figure 4. Only SVC endpoint types are discussed in the relation to this example.

Along with connection type partitioning, service category partitioning can reserve bandwidth for specific traffic applications based on customer requirements. SVCs, being quite dynamic in their nature, can be difficult to manage in terms of their network bandwidth resource demands. Partitioning in this manner attempts to ensure availability of bandwidth resources on the trunk group for specific traffic applications.

In this application example, User-A, on a UNI is assigned to a trunk group capable of establishing only real time VBR Service Categories and ABR SVCs. User-A establishes an SVC (Connection 2), that is routed to NODE-D via TG:C, which is the only SVC capable trunk group, reachable to NODE-D. Likewise, the SVC from User-B (Connection 3), to a user connected via NODE-D, is established through TG:C. TG:C, supporting only SVCs, is provisioned with multiple bandwidth partitions and service category support as illustrated in Table 1.

**Table 1**

| TG:C Service Category Partitioning Application | | |
|---|---|---|
| Bandwidth Partition | Bandwidth Percentage | Service Categories |
| 1 | 25 | nrt-VBR |
| 2 | 25 | rt-VBR |
| 3 | 50 | CBR |

The establishment of the SVC for User-A (Connection 2) requires service category support for rt-VBR. Routing and CAC assign the connection to TG:C, bandwidth partition 2. Establishment of the SVC for User-B (Connection 3), also uses TG:C. However, due to different service category requirements, this connection is allocated against bandwidth partition 3. Depletion of bandwidth resources within a bandwidth partition results in subsequent bandwidth partition compatible connection requests to either, fail to connect, or be assigned to different trunk groups, even though bandwidth resources may still be available on the Trunk Group.

In Figure 5 the illustrations for each trunk group show, based on the size of the trunk group, the relative bandwidth capacity. Within each trunk group, bandwidth partitions of relative reserved capacity are shown. The first bandwidth partition is on the top, up to the maximum reserved for the trunk group. Within each bandwidth partition service category support is indicated.

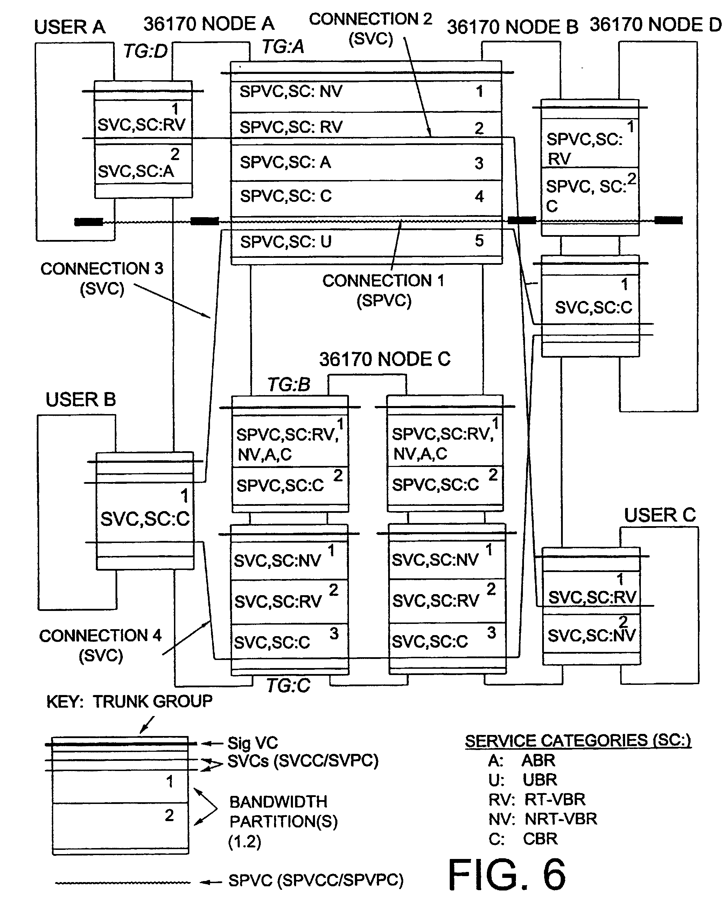

Figure 6 illustrates a more complex example, showing service category support for bandwidth partitions capable of supporting a mixture of SVCs and SPVCs on trunk groups. Compared to Figures 4 and 5, TG:A now supports bandwidth partitions and various service category combinations for SVCs and SPVCs.

Partitioning in this manner attempts to ensure availability of bandwidth resources on the trunk groups for specific traffic applications, regardless of the connection type. Additionally, partitioning in this manner is not as stringent in terms of resource partitioning, allowing more flexibility in supporting various combinations of traffic and connection type applications. It should be noted that this partitioning flexibility may be accomplished, but at the expense of ensuring bandwidth resource availability.

In Figures 4 and 5, trunk group (TG:A) provisioning on NODE-A, disallowed direct connection of SVCs to NODE-B. With TG:A re-provisioning, as shown in Figure 6, rt-VBR SVCs are now supported on bandwidth partition 2. Establishment of User-A's SVC (SC:rt-VBR connection 2), after meeting CAC criteria, is now established via TG:A bandwidth partition 2. TG:A bandwidth partition 4 is provisioned to support CBR service category for both SVCs and SPVCs. As a result, CBR service category SVCs are routable either directly using TG:A bandwidth partition 4, or through intermediate NODE-C, using TG:C bandwidth partition 3. Provisioning a bandwidth partition in this manner allows more flexibility, but at the expense of ensuring availability of bandwidth resources for a specific connection type. As a result, it is possible that service category CBR SVC(s) or SPVC(s) can exhaust TG:A bandwidth partition 4 at the expense of the other connection types. A similar result can also occur if a bandwidth partition supports multiple service categories for one or more connection types. In this case, connections of one service category allocated against a bandwidth partition can exhaust the available bandwidth at the expense of other service categories. To prevent this, a different approach would reserve separate bandwidth partitions for each connection type with the same service category. To illustrate these points, User-B initially establishes an SVC (SC:CBR) (Connection 3) to a user connected via NODE-D. The connection is routed via TG:A using bandwidth partition 4. User-B establishes a second SVC (SC:CBR) (Connection 4) to a user connected via NODE-D. Due to route preference, TG:A bandwidth partition 4 is chosen again. However, due to insufficient bandwidth, CAC fails, causing NODE_A to select the next trunk group for the route, TG:C. Assuming CAC passes using TG:C bandwidth partition 3, the connection establishment proceeds.

In Figure 6 the illustrations for each trunk group show, based on the size of the trunk group, the relative bandwidth capacity. Within each trunk group, bandwidth partitions of relative reserved capacity are shown. The first bandwidth partition is on the top, up to the maximum reserved for the trunk group. Within each bandwidth partition service category support is indicated.

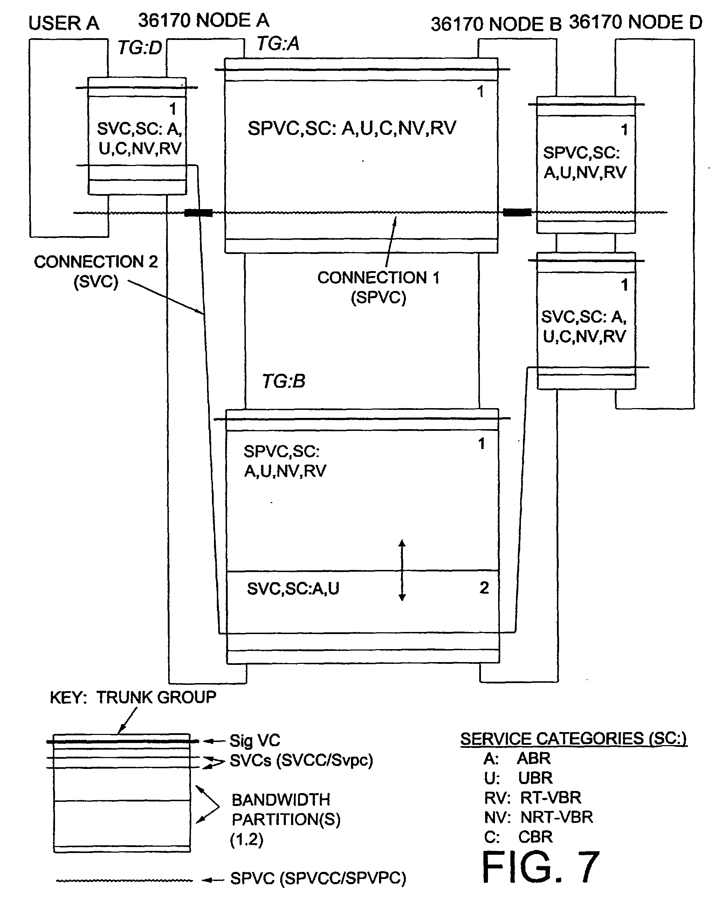

Figure 7 illustrates reservation of trunk group resources for SPVC restoration, yet allowing limited use of the restoration link for SVCs. TG:A is provisioned to carry SPVCs and is the primary link used for SVPC during normal operation (no restoration). TG:B is provisioned to carry SPVCs and ABR/UBR SVCs. TG:B is available to handle SPVCs during restoration of TG:A, i.e., if the link supporting TG:A should fail or be placed out of service. TG:B is also capable of accepting ABR, UBR SVCs (bandwidth partition 2). While these SVCs perform connection admission control against the trunk group bandwidth partition they may momentarily exceed the provisioned bandwidth. During TG:A restoration, SPVCs are re-established on TG:B. TG:B SVCs, depending on SPVC bandwidth requirements, may experience degraded performance.

As in Figure 6 the illustrations in Figure 7 for each trunk group show, based on the size of the trunk group, the relative bandwidth capacity. Within each trunk group, bandwidth partitions of relative reserved capacity are shown. The first bandwidth partition is on the top, up to the maximum reserved for the trunk group. Within each bandwidth partition service category support is indicated.

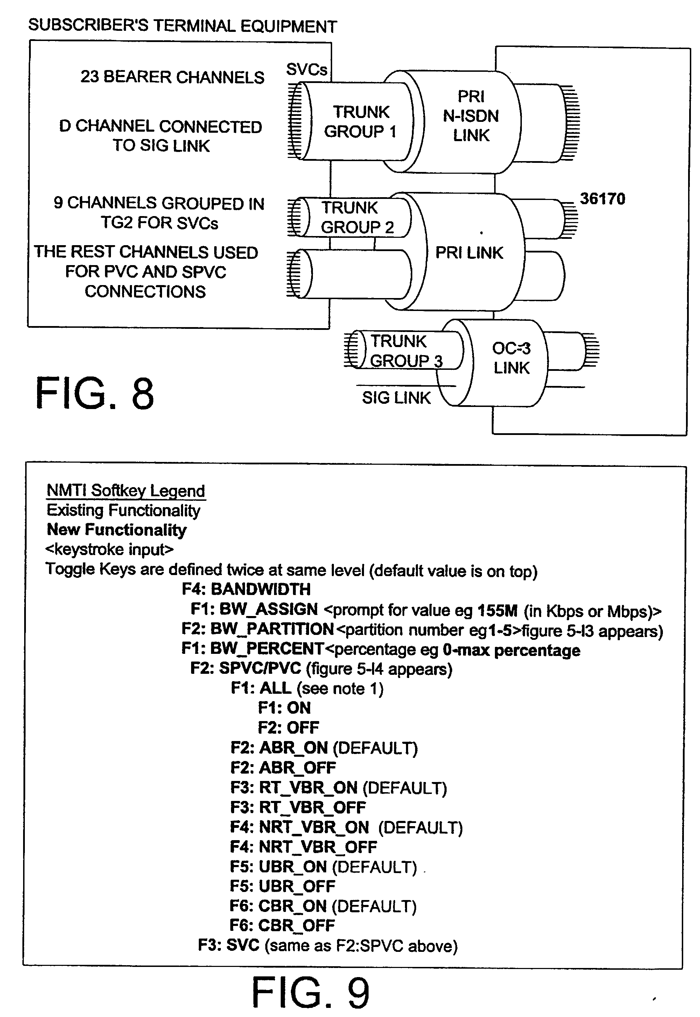

Figure 8 illustrates the typical usage of a narrow-band-type trunk group. For the PRI N-ISDN application, a narrow-band-type trunk group represents a circuit emulation (CE) port with 23 channels used for SVC connections, and one channel (D channel), used to carry signaling messages. In the more general case, a narrow-band-type trunk group may contain from one to 24 channels for T1, or from one to 31 channels for E1, and the signaling channel may be outside of the narrow band trunk group. The signaling channel may be on the same port, or on a different port of the same card, or on a different card. Figure 8 shows a signaling channel on an OC3 port controlling Narrowband Trunk Group 2. Channels on a CE port not included in a Narrowband Trunk Group can be used for PVC or SPVC connections.

Bandwidth can be assigned to a Cell Relay type trunk group. This allows more control over how much bandwidth is to be used for PVCs and SVC/SPVCs. When a bandwidth is assigned to a trunk group, the remaining bandwidth for the port is reduced by the same amount. It is not necessary to assign a bandwidth to a trunk group; in this case, the remaining bandwidth of the port is used. Example: a 155M port has 4 trunk groups, the first with a bandwidth of 20M, the second with 35M, the third and fourth share the remaining bandwidth of the port. The remaining bandwidth available for the port is 100M which is the bandwidth available for sharing between the third and fourth trunk groups.

To improve use of the bandwidth partitioning feature the user will preferably specify a trunk group bandwidth.

PVC resource connections (Signaling links, PNNI, ILMI, CPSS, etc.) perform connection admission control against the trunk group bandwidth, reducing the available effective bandwidth for all bandwidth partitions.

Reducing the provisioned trunk group bandwidth through trunk group re-provisioning, or establishment of resource connections, may result in the available bandwidth of one or more bandwidth partitions being effectively reduced to below zero. In this case, new connections will not be admitted due to CAC failure. Existing connections may become bandwidth overbooked and lead to possible performance degradation.

Port bandwidth is partitioned between trunk groups, and other bandwidth users on the port. For an interface associated with a subscriber interface, this bandwidth could be reserved for other trunk groups, SPVCs, PVCs, resource links, etc.

Resource connections also allocate from bandwidth reserved for the trunk group. As a result, the effective bandwidth available for allocation by trunk group bandwidth partitions is reduced by the amount consumed by the resource connection(s). Trunk group resource connections perform connection admission control against the trunk group, reducing the effective bandwidth available for bearer connections.

Within a Cell Relay trunk group, bandwidth can be allocated to SVC, PVC or SPVC bearer connections, or resource connections. Cell Relay Trunk group bandwidth can be further logically partitioned from one, up to some maximum number, for example five bearer connection bandwidth partitions, to allow specification of the attributes of the connections which may be admitted into the partition (e.g. allowed service categories, allowed connection types, etc.). A bearer connection bandwidth partition, referred to herein as "bandwidth partition", defines an effective bandwidth, reserved for user connection applications. Each bandwidth partition can have different effective bandwidth capacities associated with it, and different attributes to restrict and/or allow new connections.

Bandwidth may be reserved for trunk group bandwidth partitions, by specifying a percentage of the trunk group bandwidth to which they belong. Bandwidth under-booking is allowed on trunk groups. This is achieved by specifying bandwidth partition percentages that add up to less than 100 percent.

Bandwidth overbooking, at the trunk group level, is supported by selecting bandwidth partition percentages greater than 100 percent, or when summed for the trunk group, percentages which exceed 100 percent. When overbooking a bandwidth partition, the entry for the bandwidth partition percentage cannot exceed the maximum value allowed during configuration of service category overbooking.

### For example:

A trunk group with 100 MB is defined with bandwidth partitioning as follows:
- BW Partition 1 = 50% for CBR (results in a 50 MB reserved partition);
- BW Partition 2 = 50% for rt-VBR (results in a 50 MB reserved partition)
- BW Partition 3 = 50% for nrt-VBR (results in a 50 MB reserved partition), i.e., results in overbooking the trunk group, impacting the booking on the port and switching fabric.

It should be noted that by using various combinations of service category and trunk group under-booking or overbooking, the individual booking factors can cancel out or even achieve an unexpected result.

During connection routing and CAC, connection requests are evaluated against bandwidth partitions starting with the first bandwidth partition. These bandwidth partitions are used from a CAC perspective only. They do not represent the instantaneous bandwidth that can be achieved by connections for a service category, e.g., UBR and ABR.

Reducing the bandwidth of a trunk group bandwidth partition may result in the bandwidth partition's available bandwidth being reduced below zero. In this case, new connections will not be admitted due to CAC failure. Existing connections perform connection admission control against the bandwidth partition that may become bandwidth overbooked and lead to possible performance degradation.

PVCs for bearer connections using VPI and/or VCI resources assigned to the trunk group use bandwidth assigned to the trunk group for CAC purposes. Like SVCs, PVCs must pass CAC criteria before the connection is made otherwise the PVC request is rejected. PVCs perform connection admission control against the eligible bandwidth partition supporting SPVC/PVCs.

Within each bandwidth partition, support for SVC only (connection endpoints of SVCC, SVPC), SPVC only (connection endpoints supporting SPVCC, SPVPC) or combined SVC and SPVC connection types are indicated. PVCs using trunk group connection resources are also supported on the bandwidth partitions for SPVCs.

In addition to the partitioning of connection types (SVC, SPVC/PVC) for bandwidth partitions, service category partitioning is supported for the aforementioned service categories, namely: Constant Bit Rate (CBR); Real Time Variable Bit Rate (rt-VBR); Non-Real Time Variable Bit Rate (nrt-VBR); Unspecified Bit Rate (UBR); and Available Bit Rate (ABR).

Bandwidth partitions for either or both above noted connection types, can be provisioned to support none, or any set of the above service categories. During connection establishment route selection, only connection-request-compatible trunk groups are considered as candidates.

The following configuration information is configurable for a cell relay (CR) trunk group: Bandwidth Partition Connection Type (SVC; SPVC); Bandwidth Partition Bandwidth Percentage (Partition 1 through 5); and Bandwidth Partition Service Category; (ABR; UBR; nrt-VBR; rt-VBR; and CBR)

The CAC software sub-system decides whether a new connection or Trunk Group should be accepted or rejected. The decision is based on whether the quality of service can be guaranteed for all existing connections or the connections within the Trunk Groups.

For Trunk Groups the virtual bandwidth (VBW) is equal to the bandwidth specified by the Trunk Group and is kept only at the port congestion points. The Trunk Group bandwidth allocated for each Trunk Group on a port is maintained at the line card congestion points.

Trunk Groups with reserved, or specified bandwidth can be used to partition the port bandwidth into mini-ports with reserved and limited bandwidth. Trunk Group CAC is the functionality to manage this port partitioning.

Cell Relay Trunk Groups, as defined subsequently, are modified to provide additional bandwidth resource partitioning. Trunk Group reserved bandwidth, based on user provisioning requirements, is distributed in a resource bandwidth partition and up to five bearer bandwidth partitions. The resource bandwidth partition is used for tracking the bandwidth associated with resource connections. Each bearer bandwidth partition defines the allowed combination of service categories and connection types (SVC or SPVC/PVC) for CAC.

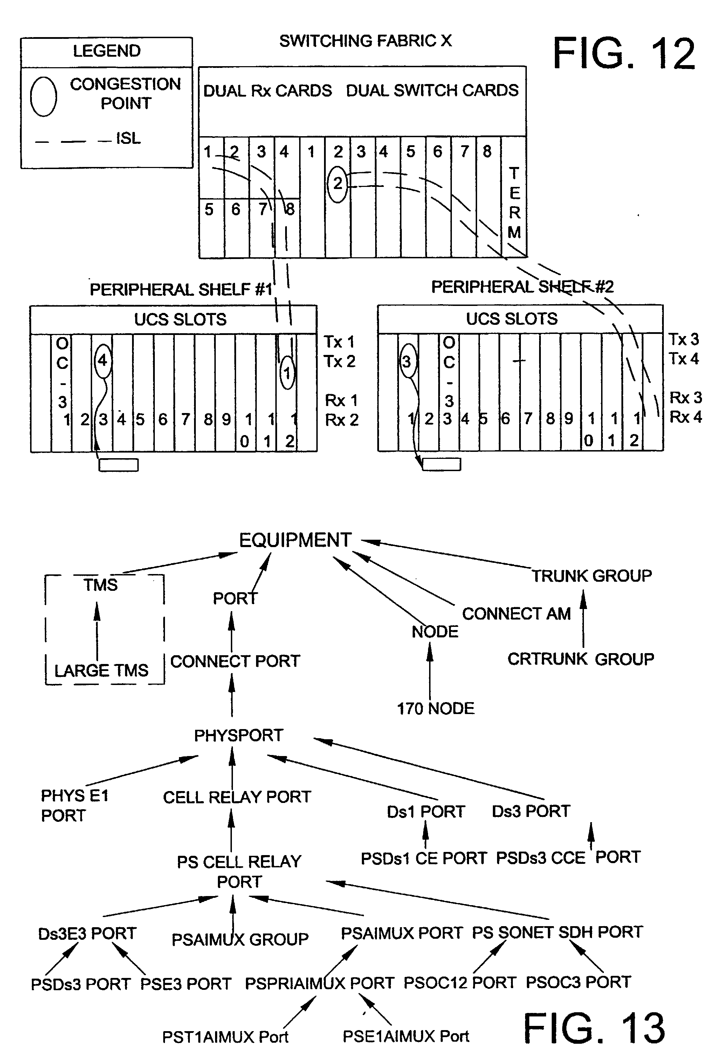

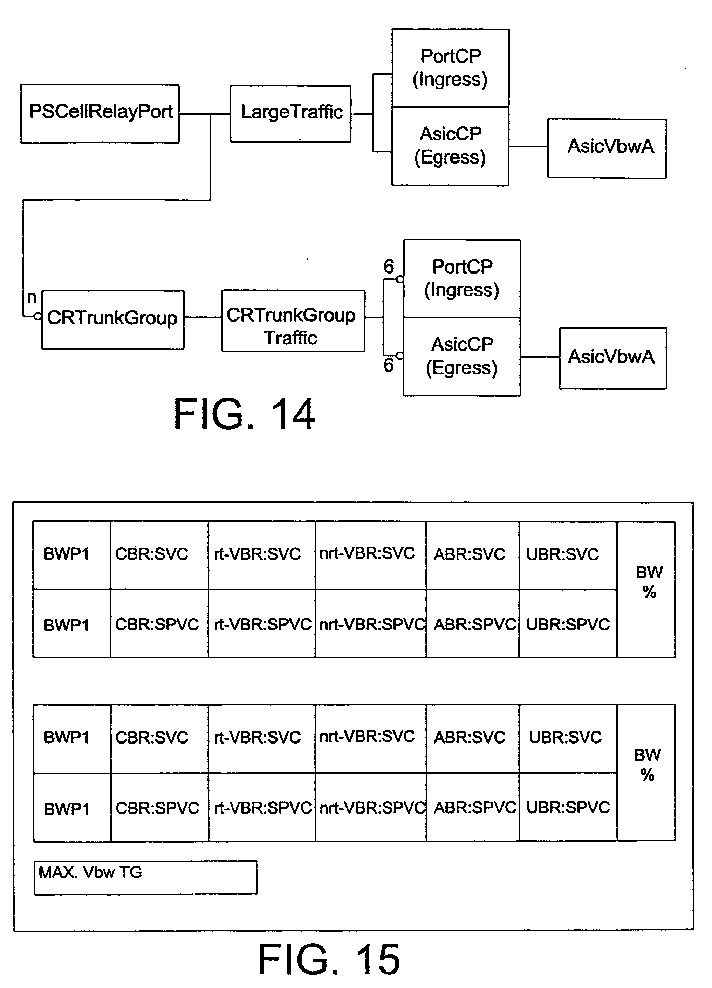

In Figure 12, which illustrates, with respect to a traffic flow example, congestion points at a switching element, point 1 is an egress multiplex (MUX) congestion point; point 2 is an egress switching (SWITCH) congestion point; point 3 is an egress port congestion point; and point 4 is an ingress port congestion point. When a Trunk Group is created with a reserved bandwidth CAC is performed for the line card congestion points (points 3 and 4 in Figure 12) as follows:
- The Trunk group specified bandwidth is subtracted from the Max Avail Vbw of both line card congestion points. CAC will reject the connection of the Trunk Group if the specified bandwidth is greater then the Max Avail Vbw at either of the two line card congestion points.
- With reference to Figure 13 which is a software hierarchy diagram and to Figure 14 which is a software object containment diagram, for Cell Relay Trunk Groups, a new CRTrunkGroupTraffic class object is instantiated with Max Avail Vbw initialized to the Trunk Group specified bandwidth.
- For Cell Relay Trunk Groups, two new trunk group congestion point objects (ingress and egress) are instantiated for the resource bandwidth partition, with Max Avail Vbw determined by summing the Vbw of the resource connections to be placed into the Trunk Group.
- For Cell Relay Trunk Groups, two new trunk group congestion point objects (ingress and egress) are instantiated for each bandwidth partition, with Max Avail Vbw initialized to a computed bandwidth derived from the Trunk Group specified bandwidth. For each bandwidth partition, the Max Avail Vbw is computed by subtracting the resource bandwidth partition Max Avail Vbw from the Trunk Group specified bandwidth and then multiplying this value by the bandwidth partition percentage factor.
- The sum of Vbw of all connections existing on the VP of the new Trunk Group are transferred from the Port's congestion points to the newly instantiated Trunk Group congestion points.
- CAC is then performed using the new Vbw totals at the Port and the Trunk Group congestion points. CAC issues a warning but accepts the Trunk Group creation if the quality of service is no longer guaranteed because of existing connections (inside or outside the Trunk Group).

CAC is not performed at the MUX and SWITCH congestion points for creation of Trunk Groups.

The virtual bandwidth totals for connections, which are part of a Trunk Group with specified bandwidth, are kept separate from the port, in congestion point objects specific for that Trunk Group. When the connections part of a Trunk Group, with specified bandwidth, is created CAC is performed as usual for the MUX and SWITCH congestion points but the congestion point objects specific to the Trunk Group are used for the line card's congestion points.

Note that if the booking factors for any of the service categories of the line cards are set, and/or the PCR/SCR scaling factors for nrt-VBR connections are set, it will impact all the connections within the trunk group as well.

The CRTrunkGroupTraffic class implements the bandwidth partition provisioning and CAC management for Cell Relay Trunk Groups. Refer to Figure 15 for the structure of this class.

Within the CRTrunkGroupTraffic class, five bandwidth partitions are defined. For each bandwidth partition, a service category and connection type combination specification is defined, indicating whether or not the combination is supported. The connection type reflects the connection endpoint, indicating SVCC, SVPC, SPVCC, SPVPC or PVCC. Connection requests are checked against this information to see if they conform before CAC is performed.

A sixth bandwidth partition (not shown in Figure 15) is reserved for resource connections. Resource connections are supported on the trunk group regardless of their service category and connection type, provided sufficient available bandwidth exists on the trunk group.

The class variable Max Vbw TG is initially set to the Trunk Group specified bandwidth. This value is not used during the CAC operation. It is used to establish the Max Avail Vbw for each of the bandwidth partitions.

When admitting connections, a conforming or eligible bandwidth partition for CAC is located before proceeding with the actual CAC operation. Starting with the first bandwidth partition and using the connection request traffic parameters, each bandwidth partition is examined to determine if the service category and connection type combinations are supported. The search continues until a conforming bandwidth partition is located, or all bandwidth partitions have been examined. If a conforming bandwidth partition is located, CAC proceeds, otherwise it fails and the connection is rejected. If during the CAC operation, capacity checking fails, a search for the next conforming bandwidth partition continues from the current bandwidth partition until either CAC is successful, or no other conforming bandwidth partition exists, in which case CAC fails and the connection request is rejected.

A Congestion Point object exists for each congestion point in the switch. Six congestion point objects (Port and Asic) also exist for each Trunk Group with specified bandwidth.

When a trunk group is created, congestion point objects are instantiated for each bandwidth partition. In this regard, each bandwidth partition is similar to a port. The trunk group specified bandwidth is distributed between the resource bandwidth partitions and bearer bandwidth partitions. First, the Vbw sum of all resource connections being placed into the trunk group is determined. This value establishes the Max Avail Vbw for the resource bandwidth partition congestion point objects. The Max Avail Vbw of the first bandwidth partition is then determined by subtracting the Max Avail Vbw of the resource partition from the trunk group specified bandwidth and then multiplying this result by the bandwidth partition bandwidth percentage factor.

When the trunk group bandwidth or the bandwidth partition bandwidth percentage is modified, the Max Avail Vbw of all bearer bandwidth partitions is adjusted. As a result, some bearer bandwidth partitions may experience Max Avail Vbw < 0.

When a resource connection is created or moved inside the trunk group and there is sufficient available bandwidth on the trunk group, the Max Avail Vbw of all bandwidth partitions, including the resource partition, are adjusted to allow the connection to be admitted. As a consequence, some bearer bandwidth partitions may experience Max Avail Vbw < 0.

When a bearer PVC is created or moved inside the trunk group it must pass a pre-CAC check before actual CAC is performed. This check requires that a bandwidth partition exists which supports the service category and connection type. If this test passes, the bandwidth partition identifies the congestion point instances (ingress and egress) to be used for the CAC operation. The connection must then pass CAC to be allowed into the trunk group.

The port trunk group congestion point (PortTGCP) object behaves the same as the port congestion point (PortCP) object except that it has a one-to-one correspondence to the trunk group bandwidth partition. The resource partition PortTGCP object behaves in a different manner. In this instance, the System Vbw counter is used to track the Vbw used at this congestion point.

If one of the endpoints is part of a Trunk Group with specified bandwidth, the Ingress and the Egress Stages checked for that endpoint are specific objects of that Trunk Group. The Trunk Group is then considered as a mini-port. At its creation the Trunk Group is allocated from the port based on its specified bandwidth, then PortTGCP and an AsicTGCP objects are instantiated for that mini-port. All connections which are part of the Trunk Group are then checked and allocated from the Trunk Group (mini-port) congestion points (and not from the port congestion points).

For each of the cases below, the CRTrunkGroupTraffic modification effects on the CR Trunk Group are defined. In general, all cases result in the application of the requested modification, followed by the re-application of the CAC equation for all connections of the trunk group against the modified trunk group configuration. Any re-application of CAC to existing connections may cause them to migrate (from a CAC perspective) to different bandwidth partitions due to the internal ordering of how the connections are tracked.

If the specified bandwidth is increased or decreased from one positive number to another, the specified bandwidth is redistributed to all bandwidth partitions. If insufficient available bandwidth exists on the port to support the modification, the request is rejected. Otherwise, the current Max Vbw TG bandwidth is returned to the port congestion point objects before the Max Vbw is set to the new specified trunk group bandwidth. For each bandwidth partition, the congestion point Max Avail Vbw is established by multiplying the bandwidth partition percentage by the Max Vbw TG minus the System Vbw associated with the resource partition. Connections existing in the trunk group are reapplied from a CAC perspective, adjusting the Max Avail Vbw of the bandwidth partition congestion points. This re-application searches for the first conforming bandwidth partition and attempts to CAC the connection. If the CAC fails, due to insufficient bandwidth, CAC is re-attempted on each of the remaining conforming bandwidth partitions until successful or the last conforming bandwidth partition is selected. In which case CAC is forced to succeed possibly overbooking the bandwidth partition and trunk group.

If the bandwidth is removed (set to 0), the CRTrunkGroupTraffic object is removed, along with associated congestion points, from the CRTrunkGroup object. The Max Avail Vbw for all congestion points is returned to the port congestion points.

If the partition bandwidth is increased or decreased from one positive number to another, it causes the Max Avail Vbw to be recomputed for the impacted bandwidth partition. The Max Vbw TG and connection CAC is re-attempted the same as for the case above, where the specified trunk group bandwidth is modified.

If the bandwidth partition is removed (set to 0), the Max Avail Vbw is set to 0. The connection CAC for the existing connections is reapplied following the steps documented below for removal of service category support from a bandwidth partition. Service category support is defined on a per-connection type basis. If the service category is removed it is removed for a connection type on the bandwidth partition.

If a service category is removed and other bandwidth partitions exist which support this service category for the connection type, this behaviour causes the existing connections to migrate from a CAC perspective, to the remaining conforming bandwidth partitions, following the same procedure as if the specified trunk group bandwidth was modified.

If a service category is removed and no other bandwidth partitions exist which support this service category for the connection type, this behaviour causes the existing non-conforming connections to migrate from a CAC perspective, to the resource partition. This is accomplished by following the steps as if the trunk group specified bandwidth was modified, treating the non-conforming connections as resource connections. The Max Avail Vbw and System Vbw for the resource partition reflects the consumed Vbw of the actual resource connections plus the consumed Vbw of all non-conforming bearer connections.

If a service category is enabled and non-conforming connections exist that match the enabled service category and connection type those connections will migrate to this bandwidth partition when the CAC is reapplied. Before this happens, the Vbw of each connection to migrate out of the resource connection is accumulated and subtracted from the System Vbw and Max Avail Vbw associated with the resource partition. The Max Avail Vbw of each bandwidth partition is computed so that the restored bandwidth is included, the same as if the specified bandwidth for the trunk group was modified.

If a service category is enabled and the service category already exists for the connection type on another bandwidth partition, connections for this service category and connection type may migrate to any conforming bandwidth partition. The behaviour is not predictable since the migration occurs by internal ordering of connections on the port.

Capacity checking is performed when an attempt is made to add a trunk group with reserved bandwidth or to change the bandwidth reserved for a trunk group. When bandwidth is reserved for a trunk group, it is as though part of the port has been split off to form a mini-port. To create the trunk group, capacity checking is only done at the line card congestion points using the bandwidth specified. The line card congestion point bandwidth is reduced by the Trunk Group specified bandwidth. The Hub and Switch congestion points are not affected when bandwidth is reserved for a trunk group.

Once bandwidth has been reserved for a trunk group, it acts as a mini-port with its own congestion points. Capacity checking for cross connects within the trunk group is performed at the trunk group congestion points and is not performed at the line card congestion points. Capacity checking for these connections is performed normally at the Hub and Switch queuing points.

Once the bandwidth reserved for a trunk group is changed, the only capacity check done is to ensure there is enough bandwidth on the port to allocate to that trunk group. This does not mean that the existing connections within that trunk group have CAC performed against the new bandwidth. The existing connections within the trunk group would stay intact, even if their required bandwidth happened to exceed the new trunk group bandwidths.

As described above, the port bandwidth can be partitioned by defining a Trunk Group with reserved bandwidth. These Trunk Groups can be viewed as mini-ports with a given bandwidth within the line card port. The Trunk Group bandwidth is subtracted from the port bandwidth and reserved for connections that are part of the Trunk Group.

The total bandwidth of cross connects between endpoints that are part of a trunk group is limited to the bandwidth definition for the trunk group. For those connections, capacity checking is performed the same way as other connections with the exception that the port bandwidth is replaced with the trunk group bandwidth for the line card congestion point.

It is possible to have a trunk group with no specified bandwidth, i.e. bandwidth of zero, created on a particular port. The capacity check for connections within this trunk group would then use the maximum port rate available for the line card congestion point.

Trunk groups with specified or reserved bandwidth, i.e., bandwidth that is non-zero, may be provisioned with several bandwidth partitions, (up to five, for example) each supporting a combination of service categories and connection types (SVC, SPVC/PVC) for CAC purposes. Trunk group reserved bandwidth is distributed between these bandwidth partitions based on customer connection requirements. The set of congestion points for the trunk group bandwidth has been replaced with five sets of congestion points each corresponding to a bandwidth partition. An additional congestion point set is reserved for any resource connections applied to the trunk group.

Trunk groups can be created with a bandwidth of zero that indicates that no special partitioning is required for this trunk group. Capacity checking is not performed when these trunk groups are created.

CAC related Trunk group reconfiguration is performed whenever any of the following trunk group attributes are modified: Trunk Group specified bandwidth; Bandwidth partition percentage; Service Category support; or Connection Type support (SVC or SPVC/PVC).

Whenever any of the trunk group attributes above are modified, CAC is performed for all existing trunk group connections with no rejection. Also, it should be noted that as a result of the trunk group attribute modifications, it is possible that one or more connections may no longer conform to the new definition of the trunk group. For example, a service category or connection type is removed from a bandwidth partition when a connection exists that originally passed CAC based on these specifications. For these cases, non-conforming connections will CAC against the resource bandwidth partition until either the connection is released, or a trunk group configuration change results in the re-establishment of these attributes on a bandwidth partition. A trunk group attribute modification may result in the trunk group becoming overbooked when CAC is performed for the trunk group connections. This will occur if there is at least one conforming bandwidth partition but insufficient bandwidth has been assigned to allow normal CAC without overbooking. CAC is forced to admit the connection using the conforming bandwidth partition(s) even though insufficient bandwidth has been assigned. This overbooking will continue until the appropriate trunk group attribute settings are specified on a bandwidth partition, bandwidth for the conforming bandwidth partition is increased, or the impacting connection(s) released. Table 3 below summarizes how the bandwidth partitioning impacts the bandwidth specifications.

If multiple conforming bandwidth partitions exist, CAC is performed using the same algorithm as used during normal connection admission. As a result of a trunk group configuration change for one of the above attributes, connections may now CAC against different bandwidth partitions. If insufficient bandwidth is assigned to the conforming bandwidth partitions the algorithm will always overbook the highest number conforming bandwidth partition.

The bandwidth specified for Trunk Groups is subtracted from the port's available bandwidth directly and is not accounted for in the total port consumed bandwidth. Tables 2 and 3 show the operations that will typically be performed by CAC when a trunk group with specified bandwidth is created/removed or the bandwidth value of a trunk group is modified. The specification for Table 2 is applied first, followed by Table 3. Both tables are to be satisfied to admit a connection.

The bandwidth symbols used in the tables are defined as follows:
PBW: Total max Port bandwidth.
APBW: The total available bandwidth for the port.
CPBW: Total consumed Bandwidth by connections outside of the TG for the Port.
TBW: Total Trunk Group Bandwidth. The Trunk group specified (reserved) Bandwidth. If TBW = 0, then the CPBW includes bandwidth of connections inside TG as well.
TPBWₙ: Total Trunk Group Bandwidth for Bandwidth Partition_{n.,} computed per user specification from a percentage of TBW (TBW > 0 only). N = 1...5, resource.
CTBW: Total Consumed Bandwidth for the Trunk Group.
CTPBWₙ: Total Consumed Trunk Group Bandwidth for Bandwidth Partitionₙ, n =1...5, resource.
TPPₙ: Trunk Group Bandwidth Partition Percentage for Bandwidth Partitionₙ, n =1...5. Specification on the distribution of trunk group reserved bandwidth between the bandwidth partitions for CAC.

**Table 2**

| Trunk Group CAC | |
|---|---|
| **Change in a Trunk Group Specified Bandwidth** | **Effect On Port Bandwidth and Port Consumed Bandwidth** |
| TBW = 0 -> | CPBW = CPBW - CTBW |
| TBW >0 | APBW=(PBW-CPBW) - TBW |
| | CAC will reject the change if APBW<0. |
| The bandwidth specified changes from zero to a positive value or a new Trunk Group is created with a specified bandwidth value greater than zero. | The Port bandwidth is reduced by the Bandwidth of the new Trunk Group. The port consumed bandwidth is decremented by the sum of bandwidth for connections part of the new Trunk Group. |
| TBW > 0 -> | CPBW = CPBW + CTBW |
| TBW= 0 | APBW = (PBW-CPBW)+TBW |
| | CAC will never reject the change. |
| The bandwidth specified changes from a positive value to zero or a Trunk Group with specified bandwidth is removed. | The Port bandwidth is incremented by the deleted Trunk Group Bandwidth The port consumed bandwidth is incremented by the bandwidth for connections part of the deleted Trunk Group. |
| TBW = x -> | APBW= (PBW-CPBW)+x-y |
| TBW = y | CAC will reject the change if |
| Where x > 0 & y > 0 | APBW<0. CAC will give a warning if CPBW>PBW. CAC will give a warning if CTBW>TBW |
| The bandwidth specified for a Trunk Group changes from one positive value to another. | The port bandwidth is adjusted to the new Trunk group Bandwidth setting. No affect on the port consumed bandwidth. |
| CTBW = x -> | CTBW = CPBW-x+y |
| CTBW = y | CAC will reject the change if |
| Where x > 0 & y > 0 | CTBW>TBW. |
| | The port bandwidth is adjusted to the new Trunk group Bandwidth setting. No affect on the port consumed bandwidth. |
| There is a new PVC connection to be admitted inside the trunk group. No changes have been done to the TBW. | |

**Table 3**

| Truck Group Bandwidth Partitioning CAC | |
|---|---|
| **Change in a Trunk Group Specified Bandwidth** | **Effect On Trunk Group Bandwidth Partition Bandwidth, Trunk Group Bandwidth Partition Consumed Bandwidth and Trunk Group Consumed Bandwidth** |
| TBW = 0 -> TBW >0 | The TPBWₙ, CTBW, and CTPBWₙ are determined: |
| The bandwidth specified changes from zero to a positive value or a new Trunk Group is created with a specified bandwidth value greater than zero. | TPBW_{resource} = CTPBW_{resource} TPBW_{n=1..5} = (TBW - TPBW_{resource}) * TPP_{n-1..5} |
| | CTBW_{resource} = Σ BW _{all resource and bearer connections within the trunk group} |
| | CTPBW_{n=1..5} = Σ BW _{all bearer connections within the trunk group for n=1..5} |
| | CAC will never reject the change. |
| | CAC will issue a warning if CTBWₙ > TPBWₙ |
| | For each trunk group connection, the connection traffic descriptor information and connection type are used to determine the appropriate bandwidth partition for adjusting the CTPBW_{n=1..5..resource} (i.e., connection type, service category , bandwidth requirements and bearer/resource connection). For conforming bearer connections, the CTBW and CTPBW_{1..n} is adjusted. For resource and non-conforming bearer connections, the TPBW _{resource}, CTPBW_{resource} and CTBW are adjusted. |
| | Note that NMTI assignment of specified bandwidth results in the creation and intialization of a single bearer bandwidth partition. |
| TBW > 0 -> TBW= 0 | The Bandwidth Partition congestion points are removed; (effectively, all TPBWₙ = 0). |
| The bandwidth specified changes from a positive value to zero or a Trunk Group with specified bandwidth is removed. | |
| TBW = x -> TBW = y | TPBW_{n=1..5} = (TBW = TPBW_{resource}) * TPP_{n=1..5} |
| Where x > 0 & y > 0 | CTPBW_{n=1..5} = Σ BW _{all bearer connections within the trunk group for n=1..5} |
| The bandwidth specified for a Trunk Group changes from one positive value to another. | |
| | CAC will give a warning if CTPBWₙ > TPBWₙ |
| | TPBW_{n=1..5} is recomputed based on the new TBW. CAC, due to the trunk group configuration change is handled the same as the case where TBW = 0 -> TBW > 0, except all the connections already exist within the trunk group. |
| TPBWₙ > 0 -> TPBWₙ= 0, i.e., TPPₙ > 0 -> TPPₙ = 0 | This TPPₙ = 0 |
| | TPBW _{n=1..5} = (TBW -TPBW_{resource}) * TPP_{n=1..5} |
| The Trunk Group bandwidth partition specified changes from a positive value changes from a positive value to zero. The Trunk Group bandwidth (TBW) remains unaffected. | CTPBW_{n=1..5} = Σ BW _{all bearer connections within the trunk group for n=1..5} |
| | CAC will give a warning if CTPBWₙ > TPBWₙ |
| | The TBW is not impacted. The TPBW_{n=1..5} is recomputed based on the redistributed bandwidth from the impacted bandwidth partition. CAC, due to the trunk group configuration change is handled the same as the case where TBW = 0 -> TBW > 0, except all the connections already exist within the trunk group. |
| TPBWₙ = x -> TPBWₙ = y | This TPPₙ = is increased or decreased. |
| Where x > 0 & y > 0 ,e.g., TPPₙ > xp% -> TPPₙ = yp% | TPBW_{n=1..5} = (TBW -TPBW_{resource}) * TPP_{n=1..5} |
| | CAC will give a warning if CTPBWₙ > TPBWₙ |
| The specified Trunk Group bandwidth partition changes from one positive value to another. The Trunk Group bandwidth (TBW) remains unaffected. | |
| | This case is similar to the above, except the partition bandwidth is not deleted. The TBW is not impacted. The TPBW_{n=1..5} is recomputed based on the redistributed bandwidth from the impacted bandwidth partition. CAC, due to the trunk group configuration change is handled the same as the case where TBW = 0 -> TBW > 0, except all the connections already exist within the trunk group. The trunk group bandwidth is redistributed between the bandwidth partitions. |
| Service Category or Connection Type: | If any connection is non-conforming: |
| 1) Is removed from a bearer bandwidth partition or, | TPBW_{resource} = CTPBW_{resource} |
| | TPBW_{n=1..5} = (TBW - TPBW_{resource}) * TPP_{n=1..5} |
| | CTPBW_{resource} = Σ BW _{all resource and bearer connections} within the trunk group |
| 2) Is added to a bearer bandwidth partition with bandwidth partition with specifications equivalent to one or more existing non-conforming connections that had CAC performed using the resource bandwidth partition. | |
| | CTPBW_{n=1..5} = Σ BW _{all bearer connections within the trunk group for n=1..5} |
| | otherwise (all conforming): |
| | CTPBW_{n=1..5} = Σ BW _{all bearer connections within the trunk group for n=1..5} |
| | CAC will give a warning if CTPBWₙ > TPBWₙ |
| | The TBW is not impacted. If non-conforming connections exist, CAC is handled the same as the case where TBW = 0 -> TBW > 0, except all the connections already exist within the trunk group. The trunk group bandwidth is redistributed between the bandwidth partitions. Otherwise only the Consumed bandwidth is impacted. |
| CTBW = x -> CTBW = y | For a resource or non-conforming connection: |
| Where x > 0 & y > 0 | TPBW_{resource} = TPBW_{resource}-x+y AND |
| There is a new PVCC connection to be admitted connection to be admitted inside the trunk group. No change has been done to the TBW. | CTPBW_{resource} = CTPBW_{resource}-x+y AND TPBW_{n=1..5} = (TBW - TPBW_{resource}) * TPP_{n=1..5} |
| | CAC will reject the request if insufficient available bandwidth exists on the trunk group i.e., CTPBW_{resource} > (TBW - CTBW). |
| | For a conforming bearer connection: |
| | CTPBWₙ = CTPBWₙ-x+y |
| | CAC will reject the request if insufficient bandwidth exists on the trunk group i.e., CTPBWₙ > (TBW- CTBW). |
| | In either case, there is no affect on existing connections. |

There is no change to the CAC capacity checking procedures for trunk group connections except that the port bandwidth (PBW) used in the calculations is replaced by the bandwidth obtained from the trunk group bandwidth partition (TPBWn).

For SVCs or PVCCs being placed into the trunk group the CAC process commences by using the traffic parameters from the connection request to locate a conforming bandwidth partition. If one is found, the CAC operation proceeds, otherwise the connection request is rejected. If the actual CAC operation fails, the next conforming bandwidth partition is located as in the initial case. If no more bandwidth partitions exist, the CAC fails and the connection request is rejected.

Based on pre-existing trunk group connections, the bandwidth reserved for resource connections is determined. The remaining bandwidth is assigned to the bearer bandwidth partition. This is similar to the case where the trunk group is assigned a specified bandwidth as documented in Table 2 and Table 3.

In the following description, AM represents an Application Module which is equivalent to a software entity as illustrated in Figure 16. SVC Routing AM queries are handled for Trunk Groups to determine whether the Trunk Group supports the requested Connection Endpoint Type and to determine if the requested Connection Type and Service Category are supported on any of the Trunk Group Bandwidth Partitions. The Trunk Group responds to the SVC Routing AM query with an eligible or ineligible Boolean flag to indicate whether or not the Trunk Group met the requested criteria. If the Trunk Group met the requested criteria then a flag indicating whether or not it is routable is also sent back to the SVC Routing AM. Trunk Group AM places the query information in RAM Cache for speed.

To determine the eligibility of a specific Trunk Group Bandwidth Partition for CAC, Port AM initiates the requests to Trunk Group AM as follows:

A Port AM request, which includes the eligible Trunk Group as determined by a SVC Routing AM, is sent to Trunk Group AM to determine if this Trunk Group has any TG Bandwidth Partitions which satisfy the provided Connection Endpoint type, Connection type and Service Category eligibility criteria. Trunk Group AM searches for and selects a Bandwidth Partition qualifying for the selection criteria within this Trunk Group and performs CAC against this Bandwidth Partition. If CAC fails, Trunk Group AM searches the next qualifying Bandwidth Partition and performs CAC again. If CAC passes on any of the qualifying Bandwidth Partitions, a response is sent to Connect AM. If CAC fails in all the qualifying Bandwidth Partitions, a response is sent to Port AM indicating the CAC failure on a qualifying Bandwidth Partition. In case no qualifying Bandwidth Partition exists, Trunk Group AM sends a response to Port AM to indicate that no qualifying Bandwidth Partition exists that satisfy the requested criteria.

A Route Request may handle either UNI or NNI routes. The Route Request process is invoked with a structure which includes traffic parameters {Class; QoS; Connection Type (SVC or SPVC); Connection End-Point Type (VCC or VPC); Service Categories, etc.} for Trunk Group's Connection Eligibility and selection and for Connect AM interaction.

At setup route request the ingress Trunk Group is queried for Connection Eligibility and whether it is routable or not. Also, the selected ingress Connection Identifier has CAC performed against the appropriate Bandwidth partition of the selected TG and reserved.

The following is an example of a dynamic call setup:
1 The call set up message arrives on a signaling link;
2 Call processing receives the message and validates the call (i.e. checks if subscriber is enabled and checks if any restrictions have been imposed on incoming subscriber) and then invokes routing to establish a routing subsystem taking into consideration relevant information such as called party number, service category and parameters associated therewith, type of call, call priority and customer ID. Routing inspects the routing options, which are lists of trunk groups, looks up the destination address to find an appropriate trunk group for the call and inspects the first TG for suitability, i.e. does any of its partitions match the attributes of the call. If yes, for each matching partition, invoke the connect subsystem to perform CAC to see if the call will fit in that partition (available bandwidth). If yes, connection is made with the switch (CAC keeps track of consumed resources -BW on a per TG partition basis). If no, the search is continued to find a matching partition within the trunk group. If there is no match within the TG, move into the next TG and continue the search. If there is no TG within the route, then an alternate route is checked. If still not successful the call is rejected.

The system may be enhanced with the use of a bit vector in each switch for each partition. When a call comes in the bit vector is computed to represent the attributes of the call. Each partition has a pre-computed bit vector representing the attributes it supports. On call request the two bit maps are ANDed to quickly determine which of the particular partitions will support the attributes of the call. The call may not necessarily fit and CAC determines this. The TG level bit map vector is ORed to find the Trunk Group.

While particular embodiments of the invention have been disclosed and illustrated it will be apparent to one skilled in the art that numerous alternatives and variation can be implemented. For instance, the example implementation is focused on cell relay but the invention is applicable to connection oriented communications technologies. It is to be understood, however, that any such alternatives and variations will fall within the scope of the invention as defined by the appended claims.

## Claims

1. A method of logically partitioning resources of ports of interconnected switching elements in a digital communications network comprising: allocating a portion of a bandwidth capacity between said ports to one or more subsets; dividing said subset bandwidth into partitions; and assigning said partitions to services having one or more specific parameters.

2. A method as defined in claim 1 wherein said one or more subsets are trunk groups.

3. A method as defined in claim 2 wherein said digital network is a cell relay network.

4. A method as defined in claim 3 wherein said cell relay network is an asynchronous transfer mode (ATM) network and said switched services connection is a virtual path (VP).

5. A method as defined in claim 4 wherein said trunk group is divided into a plurality of partitions sharing said subset bandwidth.

6. A method as defined in claim 5 wherein said subset bandwidth shared by said partitions is equal to said allocated bandwidth.

7. A method as defined in claim 5 wherein said subset bandwidth shared by said partitions is greater than said allocated bandwidth.

8. A method as defined in claim 5 wherein said subset bandwidth shared by said partitions is less than said allocated bandwidth.

9. A method as defined in claim 4 wherein one of said partitions is assigned to switched virtual connection (SVC) type of connections.

10. A method as defined in claim 4 wherein one of said partitions is assigned to soft permanent virtual circuit (SVPC) type of connections.

11. A method as defined in claim 4 wherein one of said partitions is assigned to permanent virtual circuit (PVC) connections.

12. A method as defined in claim 4 wherein one of said partitions is assigned to one or more categories of service.

13. A method as defined in claim 2 wherein said digital network is a frame relay network.

14. A method as defined in claim 13 wherein said switched services connection is a frame relay stream.

15. A method as defined in claim 5 wherein said number of partitions is five.

16. A method as defined in claim 15 wherein one or more of said partitions are assigned to a combination of service types and categories of service.

17. A system for managing resources between interconnected switching elements in a digital communications network comprising: means to allocate bandwidth at a port in each of said switching elements to a connection subset; means to divide bandwidth allocated to said connection subset into partitions; and means to assign connections to said partitions.

18. A system as defined in claim 17 wherein said subset is a trunk group.

19. A system as defined in claim 18 wherein said partitions in said trunk groups are assigned connections in accordance with connection parameters.

20. A system as defined in claim 19 wherein said connection parameters include connection type.

21. A system as defined in claim 20 wherein said connection type includes switched virtual connections (SVCs).

22. A system as defined in claim 20 wherein said connection types include soft permanent virtual circuits (SVPCs).

23. A system as defined in claim 20 wherein said connection type includes SVCs and SPVCs.

24. A system as defined in claim 20 wherein said connection type includes permanent virtual circuit (PVC) connections.

25. A system as defined in claim 19 wherein said connection parameters include service categories.

26. A system as defined in claim 19 wherein said connection parameters include user identification.

27. A system as defined in claim 19 wherein said connection parameters include connection priority.

28. A method of determining a trunk group partition for supporting a connection having particular traffic descriptors comprising: preparing a first bit vector representing service capabilities for each trunk group partition; preparing a second bit vector representing service requirements of a new connection; and comparing said first and second bit vectors to locate compatible partitions.

29. A method as defined in claim 28 wherein said first and second bit vectors are compared with an AND gate to locate compatible trunk group partitions.

30. A method as defined in claim 29 wherein bit vectors of compatible partitions are compared with an OR gate.
